# FASCICULE DE BREVET EUROPEEN

(11) **EP 0 723 103 B1**
(45) Date de publication et mention de la délivrance du brevet: **16.08.2000**
(21) Numéro de dépôt: 96400094.7
(22) Date de dépôt: 15.01.1996
(51) Int. Cl.: F16L 37/084, F16L 37/00

(54) **Dispositif de raccordement rapide d'un tube à un élément rigide**
Vorrichtung zum schnellen Verbinden eines Rohres mit einem starren Element
Device for rapidly connecting a tube to a rigid element

(30) Priorité: 19.01.1995 FR 9500580; 20.06.1995 FR 9507359
(43) Date de publication de la demande: 24.07.1996
(73) Titulaire: LEGRIS S.A., F-35000 Rennes (FR)
(72) Inventeur: Le Quere, Philippe, F-35700 Rennes (FR)
(74) Mandataire: Robert, Jean-Pierre

(56) Documents cités:
- EP-A- 0 616 161
- FR-A- 2 683 019

## Description

La présente invention concerne un dispositif de raccordement rapide d'un tube à un élément rigide et plus particulièrement un dispositif de raccordement rapide du type "cartouche" destiné à réaliser l'ancrage d'un tube dans un alésage de l'élément rigide (par exemple un corps de composant pneumatique) ainsi que l'étanchéité du raccord formé.

On connaît des dispositifs de raccordement rapide destinés à réaliser la connexion étanche d'un tube dans un alésage étagé d'un élément rigide. De manière générale, ce genre de dispositif se présente sous la forme d'un insert tubulaire comportant un corps tubulaire possédant des moyens pour son ancrage permanent dans l'élément rigide et des moyens de retenue du tube. Le plus souvent, les moyens d'ancrage sont réalisés sous la forme de dents de sapin ménagées sur la face extérieure du corps tubulaire et s'opposant au retrait axial de ce corps lorsque celui-ci est introduit à l'intérieur d'une première section de l'alésage de l'élément rigide. Les moyens de retenue du tube peuvent être réalisés sous la forme d'une rondelle à denture intérieure dont les dents sont soulevées par flexion lors de l'introduction du tube et tendent à mordre le tube pour s'opposer à son extraction, ou encore sous la forme d'une bague d'accrochage comprenant une pluralité de bras longitudinaux dont les extrémités libres possèdent des arêtes tournées vers la surface extérieure du tube et coopèrent par une surface de came avec le corps tubulaire pour être resserrées contre le tube lorsqu'il est tiré pour être extrait. Il peut en outre exister entre le tube et le corps un poussoir coulissant pour soulever les dents et permettre la déconnexion du tube. Avant montage dans l'élément rigide le dispositif de raccordement se présente sous la forme d'une "cartouche" c'est-à-dire que l'insert est pré-équipé intérieurement des moyens de retenue du tube, et se monte sur l'élément rigide par simple introduction à force dans l'alésage étagé.

L'étanchéité du raccord est assurée au moyen d'un joint d'étanchéité le plus souvent torique, logé dans une seconde section de l'alésage de plus petit diamètre que la première section lors de l'introduction du corps tubulaire à l'intérieur de la première section de l'alésage. En général, l'alésage possède une troisième section dont le diamètre, plus petit encore que celui de la seconde section, est voisin du diamètre extérieur du tube et qui est destinée à recevoir l'extrémité de ce tube pour assurer son positionnement correct.

Actuellement, la mise en place de ce dispositif à l'intérieur de l'alésage s'effectue au moyen d'un outil de montage spécifique en forme de manchon tubulaire qui force la pénétration du corps tubulaire dans l'alésage. Une pièce allongée de révolution traverse le corps tubulaire et comporte à une extrémité un épaulement qui est en appui contre une extrémité du corps tubulaire et à l'autre extrémité présente une gorge dans laquelle est logé le joint d'étanchéité. Au montage, lorsque le corps tubulaire est introduit à l'intérieur de l'alésage, le joint vient se loger dans la seconde section de l'alésage et la pièce allongée est retirée.

Toutefois, lors du stockage, du transport et des diverses manipulations que subit le dispositif de raccordement avant son montage, le joint d'étanchéité n'est pas protégé, risque de subir des dégradations, voire d'échapper à la pièce qui assure son maintien. De même, au montage, ce joint, dont le diamètre extérieur est supérieur au diamètre de la seconde section de l'alésage, frotte contre le bord d'entrée de cette seconde section et risque ainsi à nouveau d'être endommagé.

Il est donc apparu utile de concevoir un dispositif de raccordement rapide du type "cartouche" ayant des moyens de protection du joint d'étanchéité efficaces aussi bien avant que lors du montage.

Selon l'invention, on prévoit un dispositif de raccordement rapide d'un tube sous forme de cartouche insérable dans un logement cylindrique, comportant un insert tubulaire possédant extérieurement des moyens de son ancrage dans le logement et intérieurement des moyens de retenue du tube, et un joint d'étanchéité, dans lequel l'insert tubulaire comporte un nez de diamètre extérieur plus petit que celui des moyens d'ancrage de l'insert tubulaire et une bague de protection de diamètre intérieur voisin du diamètre extérieur du nez, cette bague étant montée sur l'extrémité libre du nez et étant immobilisée axialement par rapport à ce nez par un moyen de blocage de faible résistance dans une position axialement en saillie par rapport à ce nez pour recevoir intérieurement le joint d'étanchéité.

Ainsi, avant le montage, le joint d'étanchéité est maintenu solidaire de la cartouche et est protégé d'éventuelles agressions extérieures par la bague de protection qui entoure celui-ci. Lors du montage, l'insert tubulaire est introduit axialement dans une première section de l'alésage étagé. Lorsque la bague de protection parvient à l'extrémité de cette première section, elle bute contre un épaulement formé par une seconde section de l'alésage étagé de l'élément rigide. Le moyen de blocage, qui immobilisait la bague par rapport au nez, cède alors sous l'effet de l'effort de poussée axiale exercée sur l'insert tubulaire, de sorte que le nez de l'insert glisse à l'intérieur de la bague et pousse le joint à l'intérieur de la seconde section de l'alésage de l'élément rigide. De cette manière, le joint d'étanchéité, qui est déjà comprimé à l'intérieur de la bague de protection pour que son diamètre extérieur soit sensiblement voisin du diamètre de la seconde section de l'alésage, ne frotte pas contre le bord d'entrée de cette seconde section et ne subit donc aucune détérioration.

Selon un mode de réalisation avantageux, le moyen de blocage de la bague de protection consiste en une zone de liaison de cette bague de protection au nez qui est de faibles caractéristiques mécaniques.

En variante, le moyen de blocage de la bague de protection consiste en une zone de liaison par collage de cette bague avec le nez.

Selon un autre mode de réalisation avantageux, le moyen de blocage de la bague de protection comporte une saillie intérieure ménagée sur la bague de protection et coopérant avec une rainure périphérique associée du nez.

Selon une caractéristique avantageuse de l'invention, la bague de protection a un diamètre extérieur voisin de celui du moyen d'ancrage de l'insert tubulaire. Ainsi, la bague de protection assure par sa surface extérieure un guidage du dispositif à l'intérieur de la première section de l'alésage de l'élément rigide pour un meilleur centrage de l'ensemble du dispositif dans l'alésage et en particulier du joint d'étanchéité par rapport à la seconde section de l'alésage.

Selon une autre caractéristique avantageuse de l'invention, le nez a une longueur axiale au moins égale à celle de la bague de protection. Ainsi, le nez repousse le joint entièrement à l'extérieur de la bague de protection pour que ce joint soit logé dans sa totalité à l'intérieur de la seconde section de l'alésage de l'élément rigide. Avantageusement alors, la longueur axiale du nez est limitée à une valeur légèrement supérieure à la longueur axiale de la bague de protection. Ainsi, le nez ne risque pas d'écraser le joint d'étanchéité entre sa face terminale et l'épaulement formé par une troisième section de l'alésage destiné à recevoir l'extrémité du tube.

Selon un autre mode de réalisation avantageux, dans lequel le dispositif comporte un poussoir tubulaire monté à coulissement à l'intérieur de l'insert tubulaire pour commander le déverrouillage des moyens de retenue, le poussoir possède une extrémité s'étendant en saillie de l'extrémité de l'insert tubulaire opposée au nez et comportant un épaulement qui, pour une position de déverrouillage du poussoir, prend appui contre l'extrémité de l'insert tubulaire.

Dans une variante de réalisation de la bague de protection, celle-ci présente intérieurement une gorge formant un logement pour le joint d'étanchéité.

D'autres caractéristiques et avantages de l'invention apparaîtront à la lecture de la description qui suit d'un mode de réalisation particulier et non limitatif en liaison avec les figures en annexes, parmi lesquelles :
- la figure 1 est une vue en coupe par un plan axial d'un dispositif de raccordement rapide selon l'invention, représenté avant son montage à l'intérieur d'un élément rigide convenablement alésé en étages ;
- les figures 2 et 3 sont des vues analogues à la figure 1, illustrant le montage du dispositif selon l'invention à l'intérieur de l'alésage de l'élément rigide ;
- la figure 4 est une vue analogue aux figures 2 et 3 après montage ;
- la figure 5 est une vue analogue à la figure 4, illustrant le raccordement d'un tube à l'élément rigide au moyen du dispositif selon l'invention ;
- les figures 6 et 7 sont des vues partielles en coupe par un plan axial, illustrant une variante de réalisation de la bague de protection ;
- la figure 8 est une vue de détail de la zone de liaison de la bague de protection avec le nez, illustrant un premier mode de réalisation du moyen de blocage de la bague;
- la figure 9 est une vue analogue à la figure 8, illustrant une première variante de réalisation du moyen de blocage ;
- la figure 10 est une vue analogue aux figures 8 et 9, illustrant une seconde variante de réalisation du moyen de blocage ;
- les figures 11 et 12 sont des vues analogues aux figures 2 et 3, illustrant une variante de réalisation du dispositif de raccordement rapide selon l'invention.

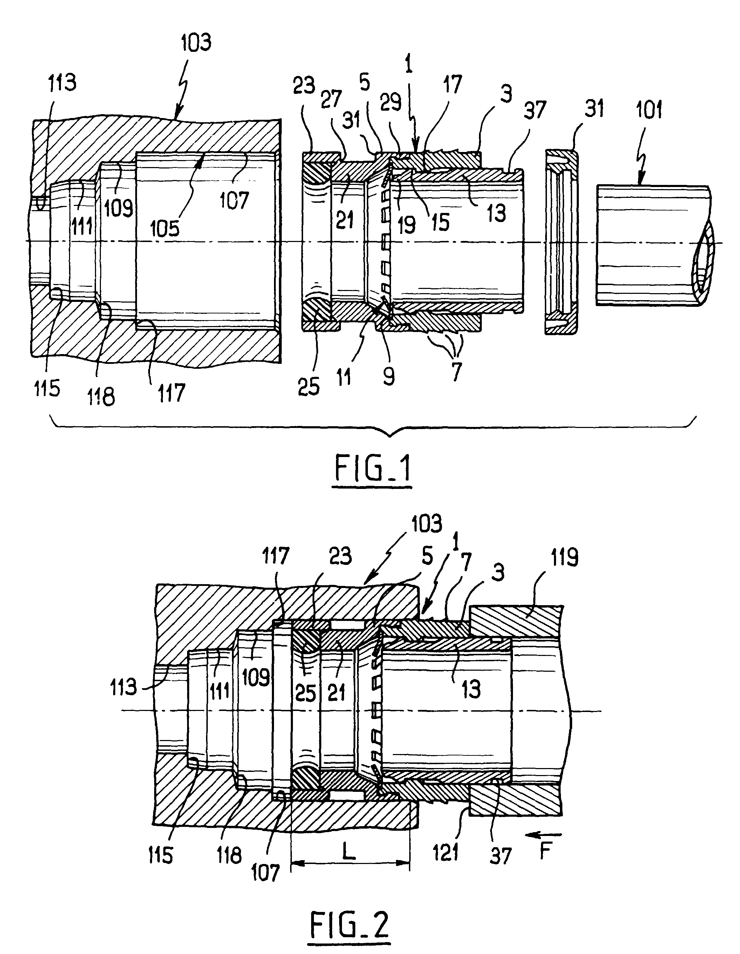

En référence aux figures, et en particulier à la figure 1, le dispositif de raccordement rapide d'un tube 101 à un élément rigide 103 se présente sous la forme d'une cartouche insérable dans un logement cylindrique 105 de l'élément 103. Il comporte un insert tubulaire 1 destiné à venir se loger dans le logement 105 de l'élément 103. L'insert 1 comporte ici deux parties : un corps tubulaire 3 et un support de joint 5. La face extérieure de la partie 3 est équipée d'aspérités 7 en forme de dents de sapin formant des moyens d'ancrage de l'insert 1 dans le logement 105. Les deux parties 3 et 5 définissent entre elles une gorge intérieure 9 qui constitue un logement pour une rondelle 11 pourvue de dents d'accrochage et de retenue du tube 101 qui sera introduit dans l'insert tubulaire 1, comme cela sera mieux expliqué ultérieurement. La rondelle 11 qui est connue en elle-même, est élastiquement déformable et sensiblement tronconique, sa circonférence intérieure étant de diamètre inférieur à celui du tube 101.

Un poussoir tubulaire 13 est monté pour coulisser axialement à l'intérieur de la partie 3 de l'insert 1 entre une positon sortie inactive dans laquelle il est en butée par un épaulement 15 contre un épaulement 17 de la partie 3, la rondelle 11 étant alors simplement en appui sur une extrémité 19 de ce poussoir 13, et une position rentrée active dans laquelle les épaulements 15 et 17 sont espacés l'un de l'autre et l'extrémité 19 soulève les dents de la rondelle 11. En outre, le diamètre intérieur du poussoir 13 est voisin de celui du tube 101. Une telle disposition est bien connue dans ce type de raccord.

Selon une caractéristique essentielle de l'invention, la partie 5 de l'insert 1 comporte un nez 21 de diamètre extérieur plus petit que celui des moyens d'ancrage 7. Une bague de protection 23 de diamètre intérieur voisin du diamètre extérieur du nez 21 est montée à l'extrémité libre du nez 21 et s'étend axialement en saillie par rapport à ce nez pour recevoir intérieurement un joint d'étanchéité 25. Ce joint d'étanchéité présente ici une surface extérieure cylindrique de diamètre légèrement plus grand que le diamètre intérieur de la bague de protection 23, et une surface intérieure torique de diamètre intérieur légèrement plus petit que le diamètre extérieur du tube 101. En outre, dans l'exemple illustré, la bague 23 a un diamètre extérieur voisin de celui des moyens d'ancrage 7 de l'insert 1.

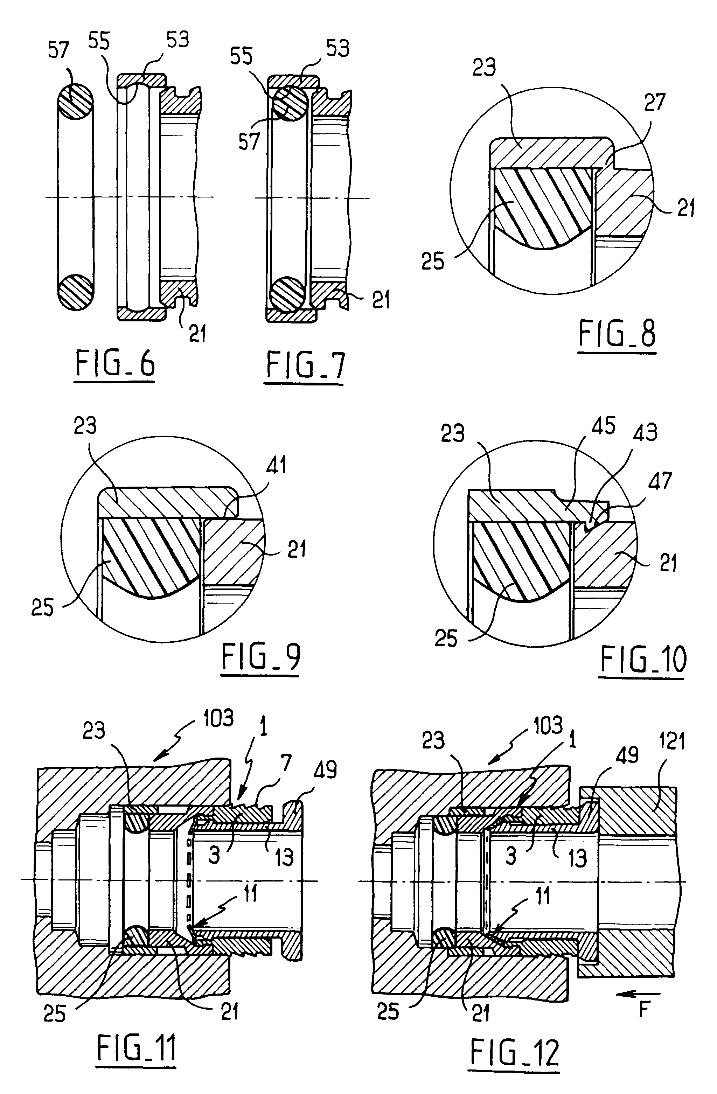

Aux figures 6 et 7, on a représenté une variante de réalisation de la bague de protection. Cette bague, référencée en 53, présente intérieurement une gorge 55 formant un logement destiné à recevoir le joint d'étanchéité 57 pour immobiliser axialement celui-ci. Cette variante est particulièrement bien adaptée à l'utilisation d'un joint de forme torique, comme cela est le cas dans l'exemple illustré.

Selon une autre caractéristique essentielle de l'invention, la bague 23 est immobilisée axialement sur le nez 27 par un moyen de blocage de faible résistance. En l'espèce, comme cela est mieux visible à la figure 8, le nez 21 et la bague 23 sont réalisés en une seule pièce reliée par une zone de liaison 27 qui est de faibles caractéristiques mécaniques. Mais il est également possible de réaliser le moyen de blocage de la bague 23 sous d'autres formes. Deux exemples de variantes de réalisation de ce moyen de blocage ont été représentés aux figures 9 et 10.

A la figure 9, on a représenté une première variante, selon laquelle la bague 23 est bloquée au moyen d'une zone de liaison par collage 41 de cette bague avec le nez 21. Dans une seconde variante, illustrée par la figure 10, la bague 23 possède une saillie intérieure 43 en forme de dent de sapin ménagée sur une portion d'extrémité 45 de la bague 23 radialement élastique. La dent 43 coopère avec une rainure périphérique associée 47 ménagée dans le nez 21. Avec ce moyen de blocage, la bague 23 ne risque pas de ce désengager accidentellement du nez 21 puisque la dent 43 s'oppose à tout effort de retrait de la bague 23. Par contre, lorsque l'insert 1 est introduit dans l'alésage 105 de l'élément 103 et que la bague 23 parvient en butée contre la face d'appui transversale 117, l'effort de poussée axial exercé sur l'insert 1 provoque le glissement de la dent 47 contre le fond de la rainure 47 qui forme une rampe provoquant la flexion de la portion d'extrémité 45 de la bague 23. La dent 43 sort ainsi de la rainure 47 et autorise le coulissement de la bague 23 sur le nez 21 comme indiqué précédemment.

En plus du nez 21, la partie 5 comporte une portion 29 dont le diamètre extérieur est égal à celui de la partie 3. Cette portion 29 forme un épaulement qui présente une face transversale 31 en regard de la bague 23 et qui constitue une butée pour celle-ci.

Avant montage, l'élément rigide 103 doit être convenablement alésé pour former le logement cylindrique 105 destiné à recevoir l'insert. Ce logement se présente ici sous la forme d'un alésage divisé axialement en quatre sections. On distingue de droite à gauche une section de grand diamètre 107 destinée à recevoir l'insert 1, une section de plus petit diamètre 109 destinée à recevoir le joint 25, une section 111 dont le diamètre correspond sensiblement au diamètre extérieur du tube 101 à raccorder et une section 113 dont le diamètre est sensiblement égal au diamètre intérieur de ce tube. Entre les sections 111 et 113, une face d'appui transversale 115 constitue une butée à l'enfoncement du tube 101. Dans l'exemple illustré, la section 111 présente une extrémité légèrement conique dont la petite base se raccorde à la face 115, afin de créer une légère compression de l'extrémité terminale du tube lorsqu'il pénètre dans la section 111 et qu'il parvient en butée contre la face 115. Entre les sections 107 et 109, une face transversale d'appui 117 constitue une butée à l'enfoncement de la bague 23 dans la section 107.

Au montage, on réalise préalablement un graissage du joint 25. Cette opération délicate est facilitée par la disposition accessible du joint 25 qui est maintenu dans la bague 23 avant son montage. Conformément à la figure 2, l'insert 1 est inséré en force dans la section 107 de l'alésage 105 au moyen d'un outil 119 en forme de manchon dont le diamètre intérieur est voisin du diamètre extérieur du poussoir tubulaire 13. A cet effet, le manchon 119 recouvre la partie du poussoir 13 qui s'étend en saillie par rapport à la partie 3 de l'insert et sa face d'appui avant 121 vient en butée contre cette partie 3. Un effort de poussée axial, symbolisé par la flèche F de la figure 2, est exercé sur le manchon 119 afin de faire pénétrer l'insert 1 à l'intérieur de la section 107 de l'alésage 105.

On notera à ce propos que la bague 23, qui possède une face extérieure cylindrique de diamètre voisin du diamètre intérieur de la section 107, améliore le guidage et le centrage de l'insert 1 à l'intérieur de la section 107. En particulier, lorsque l'effort d'emmanchement est appliqué pour faire pénétrer les dents 7 dans la section 107, la longueur importante de ce guidage, notée L à la figure 2, permet d'éviter tout arc-boutement de l'insert 1 à l'intérieur de la section 107.

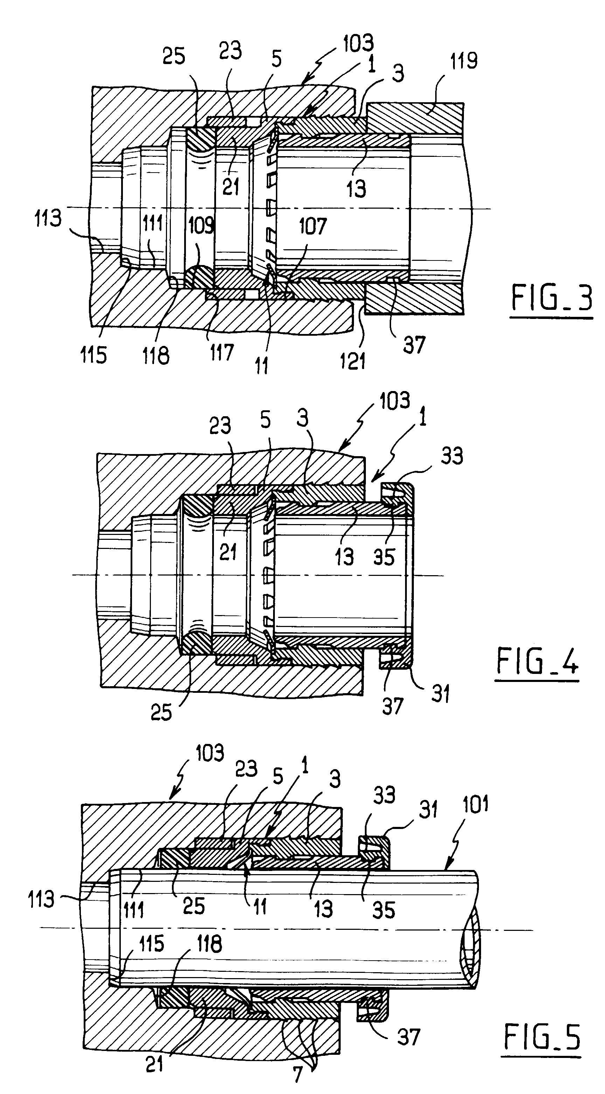

Lorsque la bague 23 parvient en butée contre la face d'appui transversale 117, l'effort de poussée axial exercé sur le manchon 119 engendre sur la zone de liaison 27 de la bague 23 au nez 21 un effort tranchant qui est suffisant pour rompre cette zone de liaison. Le nez 21 coulisse alors à l'intérieur du manchon 23 et pousse le joint 25 dans la section 109 de l'alésage 105, comme cela est symbolisé par la figure 3. On notera à ce propos que le diamètre intérieur de la bague 23 est sensiblement égal ou légèrement inférieur au diamètre de la section 109. De plus, la bague 23 est guidée par sa face extérieure dans la section 107 pour un centrage optimum de la face intérieure de cette bague par rapport à la section 109. Le joint 25 ne subit donc aucun frottement contre le bord commun de la face transversale 117 et de la section 109 lors de son transfert de la bague 23 vers cette section 109 et est donc préservé de toute détérioration.

Dans l'exemple illustré, la longueur axiale du nez 21 est légèrement supérieure à celle de la bague 23. Ainsi, lorsque la bague 23 parvient en butée contre la face transversale 31 de la partie 5 de l'insert 1, le joint 25 est entièrement dégagé de la bague 23. En outre, le fait que la bague 23 vienne en butée contre la face 31 et limite ainsi la longueur du nez 21 permet d'éviter un écrasement du joint 25 entre la face terminale du nez 21 et la face 118. Le manchon 119 peut ensuite être retiré.

Conformément à la figure 4, une bague de manoeuvre 31 est montée sur l'extrémité du poussoir tubulaire 13 qui s'étend en saillie par rapport à la partie 3 de l'insert 1, afin de faciliter le manoeuvrage ultérieur de ce poussoir. Dans l'exemple illustré, la bague 31 a une section radiale en forme de V ouvert en direction de la partie 3 et comporte une branche intérieure 33 sensiblement flexible équipée sur sa face intérieure d'un rebord 35 pour coopérer avec une rainure périphérique 37 ménagée dans l'extrémité du poussoir 13. La bague de manoeuvre 31 peut ainsi être montée à la main sans outil après que le manchon 119 a été retiré.

Lors de l'introduction du tube 101 à l'intérieur de l'insert 1, il se produit un soulèvement des dents de la rondelle 11 qui restent ainsi plaquées élastiquement contre la face extérieure du tube 101 et une compression du joint 25 pour un raccordement rigide et étanche du tube 101 dans l'élément 103, comme illustré par la figure 5.

Aux figures 11 et 12, on a représenté une variante de réalisation du dispositif de raccordement rapide selon l'invention. L'unique changement par rapport au mode de réalisation précédemment décrit concerne le poussoir 13. Celui-ci est ici pourvu d'un épaulement extérieur 49 ménagé sur sa portion d'extrémité opposée à la rondelle 11 et s'étendant en saillie de l'extrémité de l'insert 1 opposée au nez 21. Au montage, on utilise ainsi un outil 121 adapté qui prend appui, non plus sur l'insert 1, mais sur l'épaulement 49 du poussoir 13 et exerce sur celui-ci un effort de poussée F. Après un court coulissement du poussoir 13 à l'intérieur de l'insert 1 provoquant le soulèvement des dents de la rondelle 11, l'épaulement 49 prend appui contre l'extrémité correspondante de l'insert 1. L'effort de poussée F exercé par l'outil 121 est ainsi transmis à l'insert 1 sans que la rondelle 11 ne soit écrasée par le poussoir 13.

On comprend en effet qu'il est plus commode d'exercer l'effort de montage sur le poussoir 13 que directement sur l'insert 1 dans la mesure où, en tout état de cause, le poussoir 13 fait saillie à l'extérieur de l'insert 1 et est donc plus directement accessible.

## Revendications

1. Dispositif de raccordement rapide d'un tube (101) à un élément rigide sous forme de cartouche insérable dans un logement cylindrique (105), comportant un insert tubulaire (1) possédant extérieurement des moyens de son ancrage (7) dans le logement (105) et intérieurement des moyens de retenue (11) du tube (101), et un joint d'étanchéité (25 ; 55), caractérisé en ce que l'insert tubulaire (1) comporte un nez (21) de diamètre extérieur plus petit que celui des moyens d'ancrage (7) de l'insert tubulaire (1) et une bague de protection (23 ; 53) de diamètre intérieur légèrement supérieur au diamètre extérieur du nez (21), cette bague étant montée sur l'extrémité libre du nez (21) et étant immobilisée axialement par rapport à ce nez par un moyen de blocage (27) de faible résistance dans une position axialement en saillie par rapport à ce nez pour recevoir intérieurement le joint d'étanchéité (25 ; 55).

2. Dispositif de raccordement selon la revendication 1, caractérisé en ce que le moyen de blocage de la bague de protection (23 ; 53) consiste en une zone de liaison (27) de cette bague de protection au nez (21) qui est de faibles caractéristiques mécaniques.

3. Dispositif de raccordement selon la revendication 1, caractérisé en ce que le moyen de blocage de la bague de protection (23) consiste en une zone de liaison par collage (41) de cette bague avec le nez (21).

4. Dispositif de raccordement selon la revendication 1, caractérisé en ce que le moyen de blocage de la bague de protection (23) comporte une saillie intérieure (43) ménagée sur la bague de protection (23) et coopérant avec une rainure périphérique associée (47) du nez (21).

5. Dispositif de raccordement selon l'une des revendications précédentes, caractérisé en ce que la bague de protection (23 ; 53) a un diamètre extérieur voisin de celui des moyens d'ancrage (7) de l'insert tubulaire (1).

6. Dispositif de raccordement selon l'une des revendications précédentes, caractérisé en ce que le nez (21) a une longueur axiale au moins égale à celle de la bague de protection (23 ; 53).

7. Dispositif de raccordement selon la revendication 6, caractérisé en ce que la longueur axiale du nez (21) est limitée à une valeur légèrement supérieure à la longueur axiale de la bague de protection (23 ; 53).

8. Dispositif de raccordement selon l'une des revendications précédentes, comportant un poussoir tubulaire (13) monté a coulissement à l'intérieur de l'insert tubulaire (1) pour commander le déverrouillage des moyens de retenue (11), caractérisé en ce que le poussoir (13) possède une extrémité s'étendant en saillie de l'extrémité de l'insert tubulaire (1) opposée au nez (21) et comportant un épaulement (49) qui, pour une position de déverrouillage du poussoir (13), prend appui contre l'extrémité de l'insert tubulaire (1).

9. Dispositif de raccordement selon l'une des revendications précédentes, caractérisé en ce que la bague de protection (53) présente intérieurement une gorge (55) formant un logement pour le joint d'étanchéité (57).

## Patentansprüche

1. Vorrichtung zum schnellen Verbinden eines Rohres (101) mit einem starren Element in Form einer in eine zylindrische Aufnahme (105) einsetzbaren Kartusche, umfassend einen rohrförmigen Einsatz (1), der außen Verankerungsmittel (7) für seine Verankerung in der Aufnahme (105) und innen Rückhaltemittel (11) zum Festhalten des Rohres (101) hat, und eine Dichtung (25; 55), dadurch **gekennzeichnet**, daß der rohrförmige Einsatz (1) eine Nase (21) mit einem Außendurchmesser, der kleiner als der Außendurchmesser der Verankerungsmittel (7) des rohrförmigen Einsatzes (1) ist, und einen Schutzring (23; 53) mit einem Innendurchmesser hat, der leicht größer als der Außendurchmesser der Nase (21) ist, wobei dieser Ring auf dem freien Ende der Nase (21) angebracht und relativ zu dieser Nase mittels eines Feststellmittels (27) mit geringem Widerstand in einer relativ zu dieser Nase axial vorspringenden Stellung axial festgestellt ist, um innen die Dichtung (25; 55) aufzunehmen.

2. Vorrichtung zum Verbinden nach Anspruch 1, dadurch **gekennzeichnet**, daß das Feststellmittel zum Feststellen des Schutzringes (23; 53) aus einem Verbindungsbereich (27) zum Verbinden dieses Schutzringes mit der Nase (21) besteht, wobei der Verbindungsbereich geringe mechanische Eigenschaften hat.

3. Vorrichtung zum Verbinden nach Anspruch 1, dadurch **gekennzeichnet**, daß das Feststellmittel zum Feststellen des Schutzringes (23) aus einem Klebeverbindungsbereich (41) zum klebenden Verbinden dieses Ringes mit der Nase (21) besteht.

4. Vorrichtung zum Verbinden nach Anspruch 1, dadurch **gekennzeichnet**, daß das Feststellmittel zum Feststellen des Schutzringes (23) einen inneren, an dem Schutzring (23) ausgebildeten Vorsprung (43) hat, der mit einer dazugehörigen Umfangsnut (47) der Nase (21) zusammenwirkt.

5. Vorrichtung zum Verbinden nach einem der vorhergehenden Ansprüche, dadurch **gekennzeichnet**, daß der Schutzring (23; 53) einen Außendurchmesser hat, der in etwa gleich dem der Verankerungsmittel (7) des rohrförmigen Einsatzes (1) ist.

6. Vorrichtung zum Verbinden nach einem der vorhergehenden Ansprüche, dadurch **gekennzeichnet**, daß die Nase (21) eine axiale Länge hat, die wenigstens gleich der des Schutzringes (23; 53) ist.

7. Vorrichtung zum Verbinden nach Anspruch 6, dadurch **gekennzeichnet**, daß die axiale Länge der Nase (21) auf einen Wert begrenzt ist, der leicht größer als die axiale Länge des Schutzringes (23; 53) ist.

8. Vorrichtung zum Verbinden nach einem der vorhergehenden Ansprüche, umfassend einen rohrförmigen Stößel (13), der im Inneren des rohrförmigen Einsatzes (1) verschiebbar gelagert ist, um das Entriegeln der Rückhaltemittel (11) zu steuern, dadurch **gekennzeichnet**, daß der Stößel (13) ein Ende hat, das über das der Nase (21) entgegengesetzte Ende des rohrförmigen Einsatzes (1) hinausragt und eine Schulter (49) hat, die für einer Entriegelungsstellung des Stößels (13) am Ende des rohrförmigen Einsatzes (1) zur Anlage kommt.

9. Vorrichtung zum Verbinden nach einem der vorhergehenden Ansprüche, dadurch **gekennzeichnet**, daß der Schutzring (53) innen eine Nut (55) hat, die eine Aufnahme für die Dichtung (57) bildet.

## Claims

1. A quick-coupling device for coupling a tube (101) to a rigid element in the form of an insertable cartridge for coupling a tube (101) within a cylindrical housing (105), the device comprising a tubular insert (1) having external means (7) for anchoring it inside the housing (105) and internal means (11) for retaining the tube (101), together with a gasket (25; 55), the device being characterized in that the tubular insert (1) has a nose (21) of outside diameter that is smaller than the diameter of the means (7) for anchoring the tubular insert (1) and has a protection ring (23; 53) of inside diameter slightly greater than the outside diameter of the nose (21), said ring being mounted on the free end of the nose (21) and being held axially relative to the nose by weak locking means (27) in an axially projecting position relative to the nose for internally receiving the gasket (25; 55).

2. A coupling device according to claim 1, characterized in that the locking means for the protection ring (23; 53) are constituted by a connection zone (27) between said protection ring and the nose (21), which zone has weak mechanical characteristics.

3. A coupling device according to claim 1, characterized in that the locking means for the protection ring (23) consist in a zone of said ring connected to the nose (21) by adhesive (41).

4. A coupling device according to claim 1, characterized in that the locking means of the protection ring (23) comprise an internal projection (43) formed on the protection ring (23) and co-operating with an associated peripheral groove (47) of the nose (21).

5. A coupling device according to any preceding claim, characterized in that the protection ring (23; 53) has an outside diameter close to that of the means (7) for anchoring the tubular insert (1).

6. A coupling device according to any preceding claim, characterized in that the nose (21) is of an axial length that is not less than the axial length of the protection ring (23; 53).

7. A coupling device according to claim 6, characterized in that the axial length of the nose (21) is limited to a value slightly greater than the axial length of the protection ring (23; 53).

8. A coupling device according to any preceding claim, including a tubular pusher (13) slidably mounted inside the tubular insert (1) to control unlocking of the retaining means (11), the device being characterized in that the pusher (13) possesses an end that projects from the end of the tubular insert (1) remote from the nose (21) and including a shoulder (49) which, in an unlocking position of the pusher (13), bears against the end of the tubular insert (1).

9. A coupling device according to any preceding claim, characterized in that the protection ring (53) has an internal groove (55) forming a housing for the gasket (57).
